# EUROPÄISCHE PATENTSCHRIFT

(11) **EP 3 633 111 B1**
(45) Veröffentlichungstag und Bekanntmachung des Hinweises auf die Patenterteilung: **01.01.2025**
(21) Anmeldenummer: 18198217.4
(22) Anmeldetag: 02.10.2018
(51) Int. Cl.: E03B 9/04, E03B 9/16, E03B 7/07, E03C 1/10, F16K 15/02, F16K 15/06

(54) **SCHLAUCHKOPPLUNG FÜR EINEN HYDRANTEN**
HOSE COUPLING FOR A HYDRANT
RACCORD POUR TUYAU FLEXIBLE POUR UNE BOUCHE D'EAU

(43) Veröffentlichungstag der Anmeldung: 08.04.2020
(60) Teilanmeldung: 22183996.2
(73) Patentinhaber: VonRoll infratec (holding) ag, 6300 Zug (CH)
(72) Erfinder: FLURY, Christoph, 4702 Oensingen (CH)
(74) Vertreter: Troesch Scheidegger Werner AG

(56) Entgegenhaltungen:
- EP-A1- 3 012 499
- WO-A1-01/44588
- WO-A1-2004/053368
- DE-A1- 3 417 770
- DE-B1- 2 718 821
- DE-U1- 20 118 810
- JP-A- 2006 320 386
- US-A- 5 392 810
- US-A1- 2007 157 972

## Beschreibung

Die vorliegende Erfindung betrifft eine Schlauchkopplung gemäß Anspruch 1 für einen Hydranten sowie einen Hydranten.

Hydranten sind mit einem Wasserverteilungssystem verbunden und stellen eine Armatur zur Entnahme von Wasser dar, um somit der Feuerwehr als auch öffentlichen und privaten Nutzern die Wasserentnahme aus dem Wasserverteilungssystem zu ermöglichen. Der Netzdruck im Wasserverteilungssystem beträgt typischerweise ca. 6-9 bar. Hydranten umfassen ein Steigrohr mit einem Innenraum und einer Aussenseite, wobei das Wasserverteilungssystem üblicherweise über ein bodenseitiges Einlaufrohr mit dem Innenraum verbunden ist. Die Wasserentnahme erfolgt über seitliche Anschlüsse aus dem Innenraum.

Es besteht ein Problem im Stand der Technik darin, dass verunreinigtes Wasser von Ausserhalb über die Schlauchkopplung in das Innere des Hydranten und weiter in das Wasserverteilungssystem gedrückt bzw. gesaugt werden kann.

Die Druckschrift DE 10 2006 028 854 offenbart einen Rückflussverhinderer mit einem zylindrischen Gehäuse und einem Flansch an einem ersten Ende und einer Auslassseite an einem zweiten Ende. Die Auslassseite ist mit zwei Bajonettklauen zum Herstellen einer Bajonettverschlussverbindung mit z.B. einem (externen) Standrohr versehen. Im Inneren des Gehäuses des Rückflussverhinderers ist ein vertikal bewegbares Ventilschliesselement gelagert, welches sich unter Wirkung von ausströmendem Wasser von einem ebenfalls im Rückflussverhinderer integrierten Ventilsitz abhebt und im geschlossenen Zustand des Hydranten auf dem Ventilsitz aufliegt und somit den Rückflussverhinderer verschliesst. Der Rückflussverhinderer ist über seinen Flansch auf die Auslassöffnung des Unterflurhydranten aufgesetzt und hiermit verschraubt.

Bei diesem Rückflussverhinderer aus dem Stand der Technik besteht ein Problem darin, dass dieser mühsam über seinen Flansch mit der Auslassöffnung des Unterflurhydranten gekoppelt werden muss, z.B. über eine Schraubverbindung. Diese Schrauben müssen jedoch an schwer zugänglichen Bereichen gesetzt und festgezogen werden. Auch ist ein Lösen der Schrauben bedingt durch die schlechte Zugänglichkeit, durch Schmutzablagerungen und insbesondere Korrosion mühsam und zeitaufwändig. Ebenfalls müssen entsprechende fluiddichte Abdichtungen zwischen dem Rückflussverhinderer und der Auslassöffnung vorgenommen werden, z.B. mittels einer Gummidichtung zwischen dem Flansch des Rückflussverhinderers und der Auslassöffnung des Hydranten. Ein weiteres Problem bekannter Rückflussverhinderer liegt darin, dass diese im installierten Zustand hinsichtlich des Ausmasses, z.B. hinsichtlich der Länge, des Durchmessers, bzw. der Grösse allgemein, einen übermässig gross dimensionierten Fortsatz an der Auslassöffnung des Hydranten bilden. Hierdurch entstehen z.B. Platzprobleme. Aufgrund des grossen Fortsatzes kommen bisher bekannte Rückflussverhinderer bei Oberflurhydranten nicht zur Anwendung. Ein weiterer Nachteil bisher bekannter Rückflussverhinderer besteht darin, dass diese unerlaubt manipuliert, beschädigt oder entfernt werden können. Weitere Rückflussverhinderer sind auch in US5392810A, DE2718821B1 und DE3417770A1 offenbart.

Die Aufgabe der vorliegenden Erfindung besteht daher darin, eine Schlauchkopplung anzugeben, welche die vorstehend genannten Nachteile nicht aufweist.

Diese Aufgabe wird durch eine Schlauchkopplung mit den in Anspruch 1 angegebenen Merkmalen gelöst. Vorteilhafte Ausführungsvarianten sowie ein Hydrant mit einer solchen Schlauchkopplung sind in weiteren Ansprüchen angegeben.

Gemäss der vorliegenden Erfindung ist eine Schlauchkopplung gemäß Anspruch 1 für einen Hydranten angegeben, wobei die Schlauchkopplung einen Rückflussverhinderer umfasst, welcher in einer Innenleitung von der Schlauchkopplung eingerichtet ist. Der Rückflussverhinderer enthält eine Rückschlagvorrichtung, welche einen Schliesskörper, einen Dichtungssitz und eine Rückstelleinrichtung umfasst, wobei die Rückstelleinrichtung dazu ausgebildet ist, den Schliesskörper in abdichtende Anlage gegen den Dichtungssitz federelastisch vorzuspannen. Der Schliesskörper umfasst zwei schwenkbar angelenkte, im Wesentlichen halbkreisförmige Abdichtplatten, welche durch die Rückstelleinrichtung derart federelastisch vorgespannt sind, dass die Abdichtplatten wenigstens abschnittsweise abdichtend gegen den Dichtungssitz anlegbar sind, wobei die Rückstelleinrichtung eine Torsionsfeder mit zwei Schenkeln umfasst, wobei die zwei Schenkel jeweils die zwei Abdichtplatten in abdichtende Anlage gegen den Dichtungssitz federelastisch vorspannen.

Somit ist eine Schlauchkopplung mit einem Rückflussverhinderer geschaffen, welcher über die mit dem Rückflussverhinderer bestückte Schlauchkopplung zu einem grossen Teil seiner Länge in die Auslassleitung eines Hydranten eingeführt werden kann. Hierdurch erstreckt sich der Rückflussverhinderer im Wesentlichen vollständig innerhalb der Auslassleitung des Hydranten und steht nicht oder lediglich unwesentlich von der Auslassleitung des Hydranten ab. Somit wird auf unvorhersehbare und überraschende Weise der Vorteil erzielt, dass der mit dem Rückflussverhinderer ausgerüstete Hydrant weiterhin kompakt bleibt. Zudem sind Platzprobleme eliminiert und wird das ästhetische Erscheinungsbild nicht getrübt. Ebenso können unerlaubte Manipulation und Entwendung eliminiert werden.

In einer vorteilhaften Variante der Schlauchkopplung sind die zwei Abdichtplatten über einen Umfangsabschnitt hiervon abdichtend gegen den Dichtungssitz anlegbar. In einer weiteren vorteilhaften Variante der Schlauchkopplung sind die halbkreisförmigen Abdichtplatten derart schwenkbar angelenkt, dass jeweils ein halbkreisförmiger Umfangsabschnitt hiervon abdichtend gegen die Dichtfläche anlegbar ist. Die Rückstelleinrichtung umfasst eine Torsionsfeder mit zwei Schenkeln, wobei die zwei Schenkel jeweils die zwei Abdichtplatten in abdichtende Anlage gegen den Dichtungssitz federelastisch vorspannen. Somit kann die Vorspannung besonders zuverlässig an die beiden halbkreisförmigen Abdichtplatten angelegt werden.

In einer vorteilhaften Variante umfasst die Schlauchkopplung ferner ein Basisteil, ausgebildet zum schwenkbaren Lagern der zwei Abdichtplatten, wobei das Basisteil in die Innenleitung der Schlauchkopplung aufnehmbar ist. Vorzugsweise umfasst das Basisteil einen Flansch, welcher über seine Aussenfläche mit der Innenfläche der Innenleitung von der Schlauchkopplung fluiddicht koppelbar ist. Das Basisteil kann somit zuverlässig gegenüber der Innenleitung abgedichtet werden.

Die Schlauchkopplung ist ausgebildet zum Absperren eines Rückflusses von Wasser über die Schlauchkopplung in das Innere des Hydranten. Die erfindungsgemässe Schlauchkopplung ist mit einem Wasserauslass bzw. einer Auslassleitung des Hydranten koppelbar, z.B. mittels einer Gewindeverbindung, und erlaubt zudem die Ankopplung eines Wasserschlauches mittels einer korrespondierenden Kopplung am Wasserschlauch auf z.B. Art und Weise einer Klauenkopplung. Die erfindungsgemässe Schlauchkopplung zeichnet sich durch ihre Kompaktheit aus, da diese die Schlauchkopplung an sich als auch den Rückflussverhinderer vereint. Trotz vorhandenem Rückflussverhinderer ragt die erfindungsgemässe Schlauchkopplung nicht weiter vom Wasserauslass des Hydranten vor als z.B. herkömmliche Schlauchkopplungen. Somit kann diese Schlauchkopplung bei Unterflurhydranten als auch Oberflurhydranten zuverlässig eingesetzt werden.

In einer vorteilhaften Variante ist die Schlauchkopplung ausgebildet zur gewindemässigen Kopplung mit einem Wasserauslass des Hydranten. In einem Beispiel kann die Schlauchkopplung über ein vorgesehenes Aussengewinde einfach und zuverlässig in ein korrespondierendes Innengewinde im Inneren des Wasserauslasses von dem Hydranten eingeschraubt werden.

Die Erfindung betrifft ferner einen Hydranten mit einer Schlauchkopplung nach Anspruch 6 oder 7, ausgebildet zum Absperren eines Rückflusses von Wasser über die Schlauchkopplung in das Innere des Hydranten. Der Hydrant kann ein Unterflurhydrant oder Oberflurhydrant sein. Der erfindungsgemässe Hydrant verhindert einen Rückfluss von Wasser über seine Schlauchkopplung in das Innere des Hydranten und somit in das angeschlossene Wasserverteilungssystem.

Im Folgenden wird die vorliegende Erfindung anhand von in der Zeichnung dargestellten Ausführungsbeispielen weiter erläutert. Dabei zeigen:
- Fig. 1a: eine Schnittansicht von einer Schlauchkopplung, welche nicht Teil der Erfindung ist, mit einem Rückflussverhinderer in einem ausgefahrenen Zustand des Schliesskörpers hiervon in einer ersten Ansicht;
- Fig. 1b: eine Schnittansicht von der in Fig. 1a gezeigten Schlauchkopplung mit dem Rückflussverhinderer im ausgefahrenen Zustand des Schliesskörpers in einer zweiten Ansicht;
- Fig. 2a: eine Schnittansicht von der in Figuren 1a,1b gezeigten Schlauchkopplung mit dem Rückflussverhinderer in einem eingefahrenen Zustand des Schliesskörpers in einer ersten Ansicht;
- Fig. 2b: eine Schnittansicht von der in Fig. 2a gezeigten Schlauchkopplung mit dem Rückflussverhinderer im eingefahrenen Zustand des Schliesskörpers in einer zweiten Ansicht;
- Figuren 3a,b: eine Schnittansicht von einer Schlauchkopplung, welche nicht Teil der Erfindung ist, mit einem Rückflussverhinderer im geöffneten und geschlossenen Zustand in einem weiteren Aspekt; und
- Figuren 4a,b: eine Schnittansicht von einer Schlauchkopplung mit einem Rückflussverhinderer im geöffneten und geschlossenen Zustand in einer Ausführungsform gemäss der Erfindung.

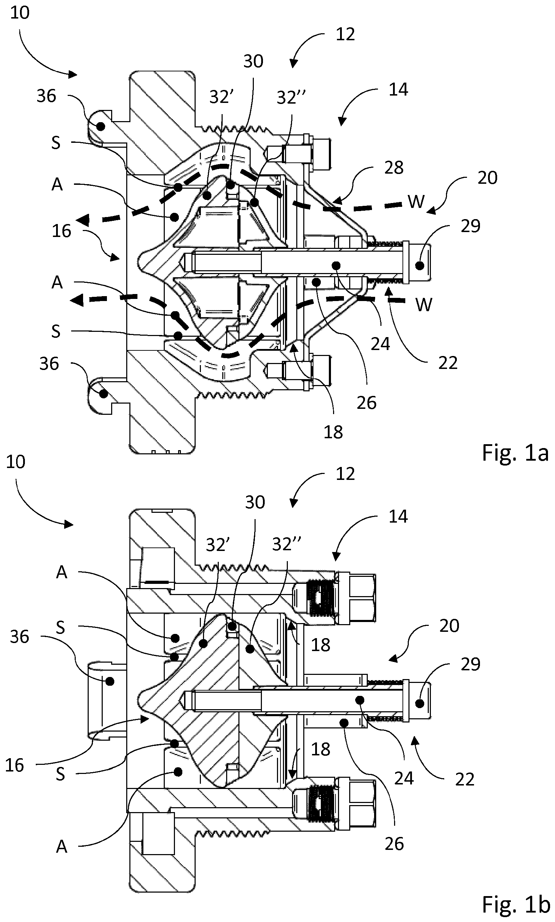

In Figuren 1a-2b ist jeweils eine Schlauchkopplung 10 in Schnittansicht dargestellt. Die Schlauchkopplung 10 ist mit einem Wasserauslass eines Hydranten (nicht gezeigt) gewindemässig koppelbar. Die Schlauchkopplung 10 ist im Inneren bzw. in einer Innenleitung hiervon mit einem Rückflussverhinderer 12 eingerichtet.

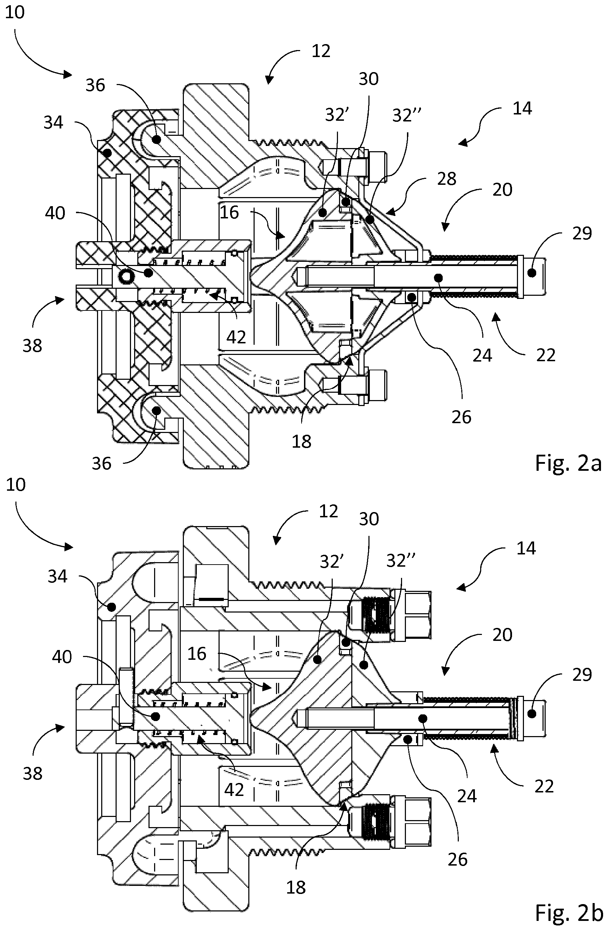

Der Rückflussverhinderer 12 enthält eine Rückschlagvorrichtung 14, welche das Ausströmen von Wasser aus dem Hydranten (in den Figuren ist die Ausströmrichtung des Wassers in Richtung von rechts nach links, siehe auch Pfeile W in Fig. 1a) zulässt, jedoch den Rückfluss von Wasser in den Hydranten absperrt. Somit kann weiterhin Wasser aus dem Hydranten bezogen werden, wird jedoch kein Wasser über die Schlauchkopplung 10 in den Hydranten eingelassen, bzw. eingesaugt. Figuren 1a,b zeigen die Schlauchkopplung 10 in einem Zustand mit ausgefahrenem Schliesskörper 16, während die Figuren 2a,b die Schlauchkopplung 10 in einem Zustand mit eingefahrenem Schliesskörper 16 zeigen.

Klauenkopplung. Die erfindungsgemässe Schlauchkopplung zeichnet sich durch ihre Kompaktheit aus, da diese die Schlauchkopplung an sich als auch den Rückflussverhinderer vereint. Trotz vorhandenem Rückflussverhinderer ragt die erfindungsgemässe Schlauchkopplung nicht weiter vom Wasserauslass des Hydranten vor als z.B. herkömmliche Schlauchkopplungen. Somit kann diese Schlauchkopplung bei Unterflurhydranten als auch Oberflurhydranten zuverlässig eingesetzt werden.

In einer vorteilhaften Variante ist die Schlauchkopplung ausgebildet zur gewindemässigen Kopplung mit einem Wasserauslass des Hydranten. In einem Beispiel kann die Schlauchkopplung über ein vorgesehenes Aussengewinde einfach und zuverlässig in ein korrespondierendes Innengewinde im Inneren des Wasserauslasses von dem Hydranten eingeschraubt werden.

Die Erfindung betrifft ferner einen Hydranten mit einer Schlauchkopplung nach Anspruch 18 oder 19, ausgebildet zum Absperren eines Rückflusses von Wasser über die Schlauchkopplung in das Innere des Hydranten. Der Hydrant kann ein Unterflurhydrant oder Oberflurhydrant sein. Der erfindungsgemässe Hydrant verhindert einen Rückfluss von Wasser über seine Schlauchkopplung in das Innere des Hydranten und somit in das angeschlossene Wasserverteilungssystem.

Es wird ausdrücklich darauf hingewiesen, dass die vorstehenden Ausführungsvarianten beliebig kombinierbar sind. Lediglich diejenigen Kombinationen von Ausführungsvarianten sind ausgeschlossen, die durch die Kombination zu Widersprüchen führen würden.

Im Folgenden wird die vorliegende Erfindung anhand von in der Zeichnung dargestellten Ausführungsbeispielen weiter erläutert. Dabei zeigen:
- Fig. 1a: eine Schnittansicht von einer Schlauchkopplung mit einem Rückflussverhinderer in einem ausgefahrenen Zustand des Schliesskörpers hiervon in einer ersten Ansicht;
- Fig. 1b: eine Schnittansicht von der in Fig. 1a gezeigten Schlauchkopplung mit dem Rückflussverhinderer im ausgefahrenen Zustand des Schliesskörpers in einer zweiten Ansicht;
- Fig. 2a: eine Schnittansicht von der in Figuren 1a,1b gezeigten Schlauchkopplung mit dem Rückflussverhinderer in einem eingefahrenen Zustand des Schliesskörpers in einer ersten Ansicht;
- Fig. 2b: eine Schnittansicht von der in Fig. 2a gezeigten Schlauchkopplung mit dem Rückflussverhinderer im eingefahrenen Zustand des Schliesskörpers in einer zweiten Ansicht;

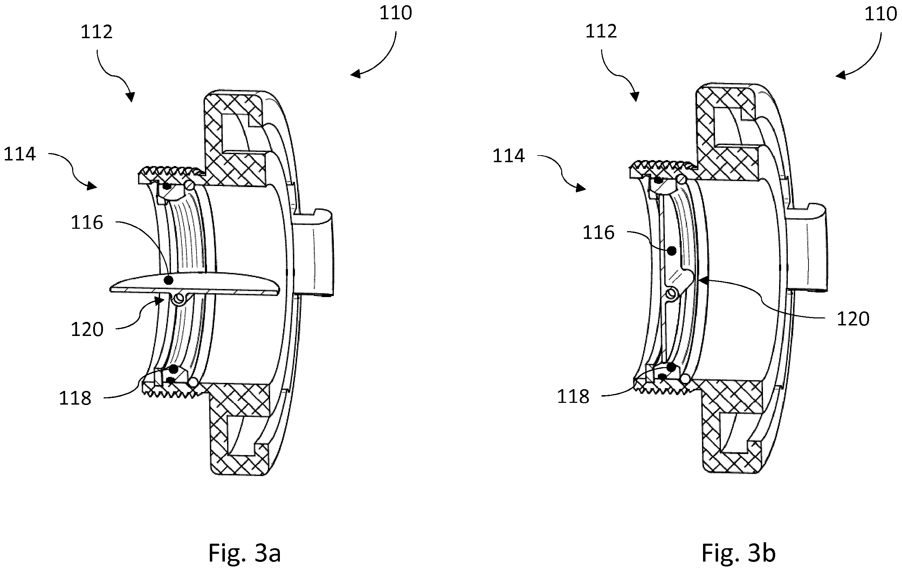

- Figuren 3a,b: eine Schnittansicht von einer Schlauchkopplung mit einem Rückflussverhinderer im geöffneten und geschlossenen Zustand in einer weiteren Ausführungsform; und

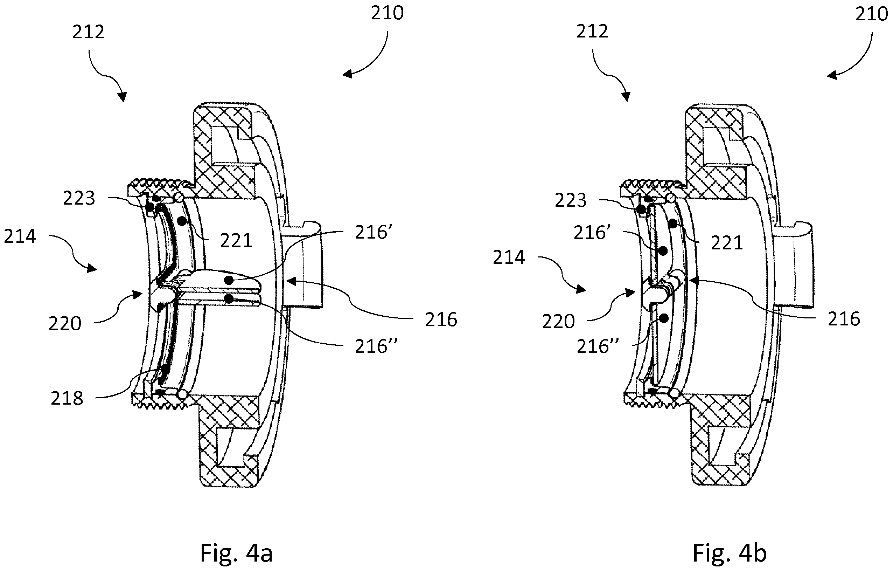

- Figuren 4a,b: eine Schnittansicht von einer Schlauchkopplung mit einem Rückflussverhinderer im geöffneten und geschlossenen Zustand in einer weiteren Ausführungsform.

In Figuren 1a-2b ist jeweils eine Schlauchkopplung 10 in Schnittansicht dargestellt. Die Schlauchkopplung 10 ist mit einem Wasserauslass eines Hydranten (nicht gezeigt) gewindemässig koppelbar. Die Schlauchkopplung 10 ist im Inneren bzw. in einer Innenleitung hiervon mit einem Rückflussverhinderer 12 eingerichtet.

Der Rückflussverhinderer 12 enthält eine Rückschlagvorrichtung 14, welche das Ausströmen von Wasser aus dem Hydranten (in den Figuren ist die Ausströmrichtung des Wassers in Richtung von rechts nach links, siehe auch Pfeile W in Fig. 1a) zulässt, jedoch den Rückfluss von Wasser in den Hydranten absperrt. Somit kann weiterhin Wasser aus dem Hydranten bezogen werden, wird jedoch kein Wasser über die Schlauchkopplung 10 in den Hydranten eingelassen, bzw. eingesaugt. Figuren 1a,b zeigen die Schlauchkopplung 10 in einem Zustand mit ausgefahrenem Schliesskörper 16, während die Figuren 2a,b die Schlauchkopplung 10 in einem Zustand mit eingefahrenem Schliesskörper 16 zeigen.

Die Figuren 1a und 1b unterscheiden sich in ihrer Darstellung darin, dass die Schlauchkopplung 10 in unterschiedlichen Ansichten gezeigt ist. Hierbei zeigt Fig. 1b die Schlauchkopplung 10 von der Fig. 1a, jedoch axial um einen Winkel von 90° umdreht. Die gleiche Beziehung hinsichtlich der Ansichten gilt auch zwischen Figuren 2a und 2b.

Die Rückschlagvorrichtung 14 umfasst einen Schliesskörper 16, einen Dichtungssitz 18 und eine Rückstelleinrichtung 20, welche den Schliesskörper 16 federelastisch in abdichtende Anlage gegen den Dichtungssitz 18 vorspannt. In der in den Figuren 1a-2b gezeigten Ausführungsform umfasst die Rückstelleinrichtung 20 eine Druckfeder 22, welche in Axialrichtung der Innenleitung ausgerichtet ist. Die Druckfeder 22 spannt hierbei den Schliesskörper 16 abdichtend gegen den Dichtungssitz 18 vor. Hierzu ist die Druckfeder 22 auf eine Achse 24 aufgesteckt. Ein Ende der Achse 24 ist mit dem Schliesskörper 16 gekoppelt. Die Achse 24 ist in einem Axiallager 26 derart gelagert, dass die Achse 24 axial führbar ist. Das Axiallager 26 verhindert zuverlässig ein mögliches Verkanten der Achse 24 beim axialen Führen derer.

Die auf die Achse 24 aufgesteckte Druckfeder 22 liegt mit einem Ende an einen ebenen Abschnitt von einer Stütze 28 an, die wiederum starr mit dem Körper der Schlauchkopplung 10 gekoppelt ist. Das weitere Ende der Druckfeder 22 liegt an einen Abschnitt von einer Kappe 29 an, die mit dem distalen Ende der Achse 24 gekoppelt ist. Die Druckfeder 22 legt eine Druckkraft zwischen der Stütze 28 und der Kappe 29 von der Achse 24 an, mit dem Resultat, dass der Schliesskörper 16 federelastisch gegenüber dem Körper der Schlauchkopplung 12 vorgespannt ist.

Im drucklosen Zustand des Hydranten (kein Wasserbezug) wird die Achse 24 durch die Federkraft der Druckfeder 22 von der Stütze 28 (und somit auch vom Körper der Schlauchkopplung 10) weggedrückt, wodurch der Schliesskörper 16 gegen den Dichtungssitz 18 gedrückt wird (siehe Figuren 2a,b). Der Schliesskörper 16 ist in dieser Situation eingefahren. Der Schliesskörper 16 wird mittels Federkraft der Druckfeder 22 gegen den Dichtungssitz 18 gedrückt, sodass die Rückstelleinrichtung 20 in diesem Zustand zuverlässig geschlossen ist. Somit kann vorteilhafterweise kein Wasser von aussen in den Hydranten hineingelangen.

Im Falle eines Wasserbezuges (siehe Figuren 1a,b) drückt das Wasser gegen eine dem Inneren des Hydranten zugewandte Fläche des Schliesskörpers 16. Die aus dem Wasserdruck resultierende Kraft auf den Schliesskörper 16 drängt diesen entgegen der Federkraft in die Öffnungsstellung. Der Schliesskörper 16 ist in dieser Situation ausgefahren. Somit kann in diesem Zustand zuverlässig Wasser aus dem Hydranten bezogen werden.

Sobald der Hydrant wieder geschlossen wird, überwiegt die Federkraft und zwängt diese den Schliesskörper 16 wieder in dichte Anlage gegen den Dichtungssitz 18. Ein Rückfluss von z.B. Löschwasser in den Hydranten wird somit verhindert.

Zur Abdichtung ist der Schliesskörper 16 mit einer umlaufenden Dichtung 30 zur zuverlässigen Abdichtung gegenüber dem Dichtungssitz 18 versehen. Die Dichtung 30 kann ein Gummimaterial enthalten. In der gezeigten Ausführungsform umfasst der Schliesskörper 16 zwei Teilkörper 32',32'', welche miteinander gekoppelt sind. Der nach aussen zugewandte Teilkörper 32' ist mit einer umfänglich umlaufenden Aussparung versehen, in welche die Dichtung 30 von der Seite aus aufgesetzt bzw. aufgenommen werden kann. Sobald die beiden Teilkörper 32',32 "' miteinander gekoppelt sind, ist die Dichtung 30 formschlüssig zwischen den beiden Teilkörpern 32',32" gehalten. Obwohl nicht gezeigt, kann die Aussparung auch im anderen Teilkörper 32'' ausgebildet sein oder kann die Aussparung in beiden Teilkörpern 32',32 " ' ausgebildet sein. Ferner, obwohl nicht gezeigt, kann der Schliesskörper einstückig ausgebildet und mit einer umfänglich umlaufenden Aussparung zur Aufnahme der Dichtung versehen sein.

Die Innenleitung der Schlauchkopplung 12 ist umfänglich mit mehreren Stegen S versehen, gegen welche der Schliesskörper 16 über seinen Umfang wenigstens abschnittsweise anschlägt. Somit kann der Schliesskörper 16 mittels der Stege S zuverlässig axial geführt werden. Die Stege S können mit (Material-)Abschnitten der Innenleitung von der Schlauchkopplung 10 einstückig ausgebildet sein, z.B. indem entsprechende Aussparungen A in das Material der Innenleitung eingetragen werden. Jene Abschnitte der Innenleitung, welche nicht ausgespart sind, bilden somit die entsprechenden Stege S. Somit liegt zwischen benachbarten Aussparungen A jeweils ein Steg S vor. Im ausgefahrenen Zustand des Schliesskörpers 16 strömt das Wasser über die Aussparungen A hinweg zur Auslassseite, wie in Fig. 1a durch Richtungspfeile W angezeigt. Der Schliesskörper 16 kann wenigstens in Richtung zur Absperrung, d.h. in Richtung zum Inneren des Hydranten, im Wesentlichen konisch zulaufen. Der Schliesskörper 16 kann auch in Richtung zur Auslassseite des Hydranten im Wesentlichen konisch zulaufen. Beispielsweise können somit Wasserwirbel im ausströmenden Wasser verhindert werden. Hierdurch kann die Strömung des Wassers optimiert werden, z.B. im Hinblick auf die optimale Durchflussrate.

Im betriebslosen Zustand des Hydranten, im eingefahrenen Zustand des Schliesskörpers 16 (siehe Figuren 2a,b), kann die Auslassseite der Schlauchkopplung 10 durch eine aufgesetzte Abdeckkappe 34 gegen die Aussenumgebung abgedichtet bzw. geschützt werden. Hierbei können an der Schlauchkopplung 10 nach aussen vorragende Klauen 36 und entsprechende Ausnehmungen am Rand der Abdeckkappe 34 miteinander auf Art und Weise einer Klauenverbindung miteinander in Eingriff gebracht werden. Die Abdeckkappe 34 kann eine Vorspanneinrichtung 38 aufweisen, welche einen Stempel 40 enthält, der mittels einer Vorspann-Druckfeder 42 gegen das distale Ende des Schliesskörpers 16 drückt. Somit wird der Schliesskörper 16 weiter zuverlässig in dichte Anlage gegen den Dichtungssitz 18 gedrückt.

Die Figuren 3a,b und 4a,b zeigen jeweils eine Schlauchkopplung 110;210 mit jeweils eingerichtetem Rückflussverhinderer 112;212 im geöffneten und geschlossenen Zustand in weiteren unterschiedlichen Ausführungsformen. In beiden Ausführungsformen umfasst der Rückflussverhinderer 112;212 eine Rückschlagvorrichtung 114;214, welche den Rückfluss von Wasser in den Hydranten absperrt, solange der Hydrant geschlossen ist. Ebenso in beiden Ausführungsformen umfasst die Rückschlagvorrichtung 114;214 einen Schliesskörper 116;216, einen Dichtungssitz 118;218 und eine Rückstelleinrichtung 120;220, welche den Schliesskörper 116;216 in abdichtende Anlage gegen den Dichtungssitz 118;218 federelastisch vorspannt.

Figuren 3a,b zeigen jeweils eine Schnittansicht von einer Schlauchkopplung 110 mit einem Rückflussverhinderer 112 im geöffneten und geschlossenen Zustand in einer weiteren Ausführungsform. In der gezeigten Ausführungsform sind der Schliesskörper 116 als eine schwenkbar angelenkte Abdichtplatte 116 und die Rückstelleinrichtung 120 als eine Torsionsfeder 120 oder Drehstabfeder (schematisch dargestellt) ausgeführt, welche die Abdichtplatte 116 gegenüber dem Körper der Schlauchkopplung 110 derart federelastisch vorspannt, dass die Abdichtplatte 116 über ihren Umfangsabschnitt wenigstens abschnittsweise abdichtend gegen die Dichtfläche 118 anschlägt. Sobald der Hydrant geöffnet wird, ist eine in Strömungsrichtung an die Abdichtplatte 116 angelegte Kraft grösser als die Federkraft der Torsionsfeder 120. Hierdurch wird die Abdichtplatte 116 vom Dichtungssitz 118 abgehoben und strömt das Wasser an die Auslassseite. Sobald der Hydrant wieder geschlossen ist, überwiegt das durch die Torsionsfeder 120 angelegte Drehmoment, und wird die Abdichtplatte 116 wieder gegen den Dichtungssitz 118 gedrückt. Somit wird ein Rückfluss von Wasser in den Hydranten verhindert.

Figuren 4a,b zeigen jeweils eine Schnittansicht von einer Schlauchkopplung 210 mit einem Rückflussverhinderer 212 im geöffneten und geschlossenen Zustand in einer weiteren Ausführungsform. In der in den Figuren gezeigten Ausführungsform ist der Schliesskörper als Abdichtplatten 216 ausgeführt, umfassend zwei im Wesentlichen halbkreisförmige Abdichtplatten 216',216''. Die Abdichtplatten 216',216"sind derart schwenkbar angelenkt, dass jeweils ein halbkreisförmiger Umfangsabschnitt derer abdichtend gegen einen Dichtungssitz 218 angelegt wird. Ferner ist die Rückstelleinrichtung als eine oder mehrere Torsionsfedern 220 bzw. Drehstabfedern (schematisch dargestellt) ausgeführt, welche jeweils, z.B. mittels der beiden Schenkel der Torsionsfeder, die Abdichtplatten 216',216'' in abdichtende Anlage gegen den Dichtungssitz 218 federelastisch vorspannen. Der Rückflussverhinderer 212 umfasst ferner ein Basisteil 221, an welchem die beiden Abdichtplatten 216',216"' schwenkbar gelagert sind. Das Basisteil 221 ist in die Innenleitung der Schlauchkopplung 210 einsetzbar. Hierzu umfasst das Basisteil 221 einen Flansch 223, welcher über seine Aussenfläche mit der Innenfläche der Innenleitung von der Schlauchkopplung 210 fluiddicht, z.B. mittels eines O-Rings, gekoppelt ist. Der Rückflussverhinderer 212 kann mittels eines Sprengrings oder Seegerrings an der Innenleitung der Schlauchkopplung 210 entnehmbar fixiert werden. Somit kann die Schlauchkopplung 210 auch nachträglich mit dem Rückflussverhinderer 212 bestückt werden. Ebenso können Wartungsarbeiten vereinfacht werden.

Sobald der Hydrant geöffnet wird, ist eine in Strömungsrichtung an die Abdichtplatten 216',216'' angelegte Kraft grösser als ein durch die Torsionsfeder 220 bzw. Drehstabfeder angelegtes Drehmoment, wodurch die Abdichtplatten 216',216"' vom Dichtungssitz 218 abgehoben werden (siehe Fig. 4a). Somit strömt das Wasser an die Auslassseite des Hydranten. Sobald der Hydrant wieder geschlossen ist, werden die Abdichtplatten 216',216"' durch die Torsionsfeder 220 wieder gegen den Dichtungssitz 218 gedrückt bzw. gezwängt, um somit einen Rückfluss von Wasser in den Hydranten zu verhindern (siehe Fig. 4b).

## Patentansprüche

1. Schlauchkopplung (210) für einen Hydranten, wobei die Schlauchkopplung (210) einen Rückflussverhinderer (212) umfasst, welcher in einer Innenleitung von der Schlauchkopplung (210) eingerichtet ist, wobei der Rückflussverhinderer (212) eine Rückschlagvorrichtung (214) enthält, welche einen Schliesskörper (216), einen Dichtungssitz (218) und eine Rückstelleinrichtung (220) umfasst, wobei die Rückstelleinrichtung (220) dazu ausgebildet ist, den Schliesskörper (216) in abdichtende Anlage gegen den Dichtungssitz (218) federelastisch vorzuspannen, wobei der Schliesskörper zwei schwenkbar angelenkte, im Wesentlichen halbkreisförmige Abdichtplatten (216',216'') umfasst, welche durch die Rückstelleinrichtung (220) derart federelastisch vorgespannt sind, dass die Abdichtplatten (216',216'') wenigstens abschnittsweise abdichtend gegen den Dichtungssitz (218) anlegbar sind, wobei die Rückstelleinrichtung eine Torsionsfeder (220) mit zwei Schenkeln umfasst, wobei die zwei Schenkel jeweils die zwei Abdichtplatten (216',216'') in abdichtende Anlage gegen den Dichtungssitz (218) federelastisch vorspannen.

2. Schlauchkopplung (210) nach Anspruch 1, wobei die zwei Abdichtplatten (216',216'') über einen Umfangsabschnitt hiervon abdichtend gegen den Dichtungssitz (218) anlegbar sind.

3. Schlauchkopplung (210) nach Anspruch 2, wobei die halbkreisförmigen Abdichtplatten (216',216'') derart schwenkbar angelenkt sind, dass jeweils ein halbkreisförmiger Umfangsabschnitt hiervon abdichtend gegen die Dichtfläche (218) anlegbar ist.

4. Schlauchkopplung (210) nach einem der Ansprüche 1 bis 3, ferner umfassend ein Basisteil (221), ausgebildet zum schwenkbaren Lagern der zwei Abdichtplatten (216',216''), wobei das Basisteil (221) in die Innenleitung der Schlauchkopplung (210) aufnehmbar ist.

5. Schlauchkopplung (210) nach Anspruch 4, wobei das Basisteil (221) einen Flansch (223) umfasst, welcher über seine Aussenfläche mit der Innenfläche der Innenleitung von der Schlauchkopplung (210) fluiddicht koppelbar ist.

6. Schlauchkopplung (210) nach einem der Ansprüche 1 bis 5, ausgebildet zum Absperren eines Rückflusses von Wasser über die Schlauchkopplung (210) in das Innere des Hydranten.

7. Schlauchkopplung (210) nach Anspruch 6, ausgebildet zur gewindemässigen Kopplung mit einem Wasserauslass des Hydranten.

8. Hydrant mit einer Schlauchkopplung (210) nach Anspruch 6 oder 7, ausgebildet zum Absperren eines Rückflusses von Wasser über die Schlauchkopplung (210) in das Innere des Hydranten.

## Claims

1. Hose coupling (210) for a hydrant, wherein the hose coupling (210) comprises a backflow preventer (212) installed in an inner conduit of the hose coupling (210), wherein the backflow preventer (212) contains a non-return device (214) comprising a closing body (216), a seal seat (218) and a resetting device (220), wherein the resetting device (220) is adapted to resiliently pretension the closing body (216) into sealing engagement against the seal seat (218), wherein the closing body (216) comprises two pivotally articulated substantially semicircular sealing plates (216',216'') which are resiliently pretensioned by the resetting device (220) in such a way that the sealing plates (216',216'') can be applied at least in sections in a sealing manner against the sealing seat (218), wherein the resetting device (220) comprises a torsion spring (220) having two legs, wherein the two legs resiliently pretension each of the two sealing plates (216',216'') into sealing engagement against the seal seat (218).

2. Hose coupling (210) according to claim 1, wherein the two sealing plates (216',216") by means of a peripheral portion thereof are applied in a sealing manner against the sealing seat (218).

3. Hose coupling (210) according to claim 2, wherein the semi-circular sealing plates (216',216'') are pivotally articulated in such a way that a semi-circular circumferential portion thereof can be applied in a sealing manner against the sealing surface (218).

4. Hose coupling (210) according to one of claims 1 to 3, further comprising a base part (221) adapted to pivotally support the two sealing plates (216',216"), wherein the base part (221) can be accommodated in the inner conduit of the hose coupling (210).

5. Hose coupling (210) according to claim 4, wherein the base part (221) comprises a flange (223) which can be coupled in a fluid-tight manner via its outer surface to the inner surface of the inner conduit of the hose coupling (210) .

6. Hose coupling (210) according to one of claims 1 to 5, adapted to shut off a backflow of water via the hose coupling (210) into the interior of the hydrant.

7. Hose coupling (210) according to claim 6, adapted for threaded coupling to a water outlet of the hydrant.

8. Hydrant comprising a hose coupling (210) according to claim 6 or 7, adapted to shut off a backflow of water via the hose coupling (210) into the interior of the hydrant.

## Revendications

1. Raccord pompiers (210) pour bouche d'incendie, dans lequel le raccord pompiers (210) comporte un dispositif anti-refluement (212) qui est inséré dans une conduite interne du raccord pompiers (210), dans lequel le dispositif anti-refluement (212) contient un dispositif anti-retour (214) qui comprend un clapet (216), un siège de garniture (218) et un dispositif de rappel (220), dans lequel le dispositif de rappel (220) est conçu de façon à précontraindre le clapet (216) contre le siège de garniture (218) dans une disposition de fermeture étanche, dans lequel le clapet (216) comporte deux plaques d'étanchéité (216', 216''), essentiellement en forme de demi-cercle et articulées de façon à pivoter, qui sont précontraintes de façon élastique par le dispositif de rappel (220) de façon telle que les plaques d'étanchéité (216', 216'') peuvent être disposées, au moins par segment, de façon étanche contre le siège de garniture (218), dans lequel le dispositif de rappel (220) comporte un ressort de torsion (220) qui comprend deux branches, les deux branches précontraignant par élasticité les deux plaques d'étanchéité (216', 216'') respectives contre le siège de garniture (218) dans une disposition de fermeture étanche.

2. Raccord pompiers (210) selon la revendication 1, dans lequel les deux plaques d'étanchéité (216', 216'') peuvent être disposées de façon étanche contre le siège de garniture (218) par le biais d'un segment périphérique de celles-ci.

3. Raccord pompiers (210) selon la revendication 2, dans lequel les plaques d'étanchéité (216', 216'') en forme de demi-cercle sont articulées pour pivoter de façon telle qu'un segment périphérique en demi-cercle respectif de celles-ci est disposé contre la surface d'étanchéité (218).

4. Raccord pompiers (210) selon l'une des revendications 1 à 3, comprenant en outre une partie de base (221), conçue pour loger par pivotement les deux plaques d'étanchéité (216', 216''), la partie de base (221) pouvant être logée dans la conduite interne du raccord pompiers (210).

5. Raccord pompiers (210) selon la revendication 4, dans lequel la partie de base (221) comporte une bride (223) qui peut être, via sa surface extérieure, couplée à la surface intérieure de la conduite interne du raccord pompiers (210) de façon étanche aux fluides.

6. Raccord pompiers (210) selon l'une des revendications 1 à 5, conçu pour bloquer un refluement d'eau, via le raccord pompiers (210), dans l'intérieur de la bouche d'incendie.

7. Raccord pompiers (210) selon la revendication 6, conçu pour un raccordement par filetage avec une sortie d'eau d'une bouche d'incendie.

8. Bouche d'incendie comportant un raccord pompiers (210) selon la revendication 6 ou 7, conçue pour bloquer, via un raccord pompiers (210), un refluement d'eau dans l'intérieur de la bouche d'incendie.
